# FASCICULE DE BREVET EUROPEEN

(11) **EP 1 291 280 B1**
(45) Date de publication et mention de la délivrance du brevet: **16.06.2004**
(21) Numéro de dépôt: 02291933.6
(22) Date de dépôt: 31.07.2002
(51) Int. Cl.: B64C 1/12, B64C 1/40

(54) **Ensemble structurel d'un aéronef à voilure tournante**
Strukturelement für einen Drehflügler
Structural element for a rotary wing aircraft

(30) Priorité: 06.09.2001 FR 0111531
(43) Date de publication de la demande: 12.03.2003
(73) Titulaire: EUROCOPTER, 13725 Marignane Cédex (FR)
(72) Inventeur: Dussac, Marc, 13140 Miramas (FR); Vincent, Henri-Charles, 13011 Marseille (FR)
(74) Mandataire: Renaud-Goud, Thierry

(56) Documents cités:
- EP-A- 0 279 620
- DE-A- 4 138 047
- GB-A- 1 067 187
- US-A- 2 095 626
- US-A- 2 925 050
- US-A- 6 158 690

## Description

La présente invention concerne un ensemble structurel d'une partie d'un aéronef, en particulier d'un aéronef à voilure tournante et notamment d'un hélicoptère, ainsi qu'un aéronef qui est muni d'un tel ensemble structurel.

La partie de l'aéronef qui est prise en compte dans la présente invention est, de préférence, une partie destinée à être occupée par des personnes, telle que le poste de pilotage ou la cabine des passagers par exemple. On sait que l'ensemble structurel d'une telle partie d'aéronef comporte, notamment, une partie de structure de fuselage de l'aéronef, ainsi que des panneaux d'habillage qui sont fixés à l'intérieur de cette partie de structure de fuselage.

On sait de plus qu'à l'intérieur d'un tel ensemble structurel est présent un phénomène qui est particulièrement gênant pour les occupants, notamment dans le cas d'un aéronef à voilure tournante, à savoir le bruit.

Plus particulièrement, sur un aéronef à voilure tournante, on sait que les spectres acoustiques définis dans le domaine compris entre 20 Hz et 20 kHz relèvent de la superposition de bruits d'origines différentes, susceptibles d'être rassemblés en deux groupes différents selon leurs caractéristiques spectrales, à savoir les sons purs ou bruits de raies et les bruits à large bande.

De façon connue, les sons purs ou bruits de raies apparaissent notamment, le cas échéant :
- aux fréquences caractéristiques de la chaîne cinématique de l'aéronef ;
- aux fréquences de passage des pales des rotors (principal et arrière) et aux harmoniques de ces fréquences ;
- aux fréquences de passage des pales des compresseurs des groupes turbomoteurs ; et/ou
- aux fréquences de passage des pales des ventilateurs de refroidissement de la boîte de transmission principale et/ou d'équipements électriques, ainsi qu'aux harmoniques de ces fréquences,
tandis que les bruits à large bande comprennent notamment le cas échéant :
- le bruit de couche limite se développant sur le fuselage ;
- le bruit engendré par les rotors ;
- le bruit d'écoulement des entrées d'air et des tuyères;
- le bruit de moteur ; et/ou
- le bruit des circuits de climatisation ou de chauffage du poste de pilotage ou de la cabine des passagers.

Bien que tous ces bruits puissent poser des problèmes, la gêne acoustique ressentie par les passagers et l'équipage est occasionnée essentiellement par les bruits de raies provenant de la boîte de transmission principale [disposée entre le(s) moteur(s) et les rotors (principal et arrière)] et/ou du (des) moteur(s) situé(s) au-dessus de la cabine, ainsi que du bruit d'origine aérodynamique provenant du rotor principal et des entrées d'air. Par conséquent, la présente invention qui compte limiter cette gêne acoustique a pour objet de réduire principalement lesdits bruits de raies.

Il existe différentes solutions connues pour réduire de tels bruits à l'intérieur d'un aéronef à voilure tournante, notamment un hélicoptère.

On sait que la technique employée généralement pour réduire, de façon industrielle, le bruit interne d'un hélicoptère consiste à réduire le niveau vibratoire ou le rayonnement de sources de bruit et/ou du fuselage. La conception des traitements appropriés fait appel aux mécanismes physiques suivants :
- une réduction de la réponse vibratoire par l'ajout de matériau fortement amortissant sur les panneaux constituant la structure ;
- une diminution de la transmission acoustique et/ou du rayonnement acoustique de ces mêmes panneaux par modification de la raideur (emploi de raidisseurs localisés ou optimisation de l'empilement des couches dans le cas d'une structure sandwich) ;
- l'introduction d'absorption acoustique par collage sur une face du panneau structural ou d'habillage de mousses acoustiques ou l'emploi de sachets de laine de verre, de roche, ... ;
- un effet de double cloison entre un panneau structural et son panneau d'habillage ; et
- un effet de résonateurs d'Helmhotz par l'ajout de tissus perforés sur les panneaux.

Les trois premières solutions permettent effectivement de diminuer le niveau général de bruit en cabine dans un large domaine de fréquences, mais entraînent une pénalité de masse élevée. De plus, elles nécessitent un traitement direct de la structure et doivent donc respecter de nombreuses exigences : tenue au feu, maintenance, ... En outre, l'atténuation de l'émergence du bruit de raies n'est pas suffisante pour faire disparaître la gêne acoustique spécifique aux sons purs. Quant à la cinquième solution, elle permet effectivement de réduire le bruit dans une bande étroite de fréquences, mais uniquement pour une fréquence choisie à la conception des panneaux. La quatrième solution est en revanche beaucoup plus intéressante, car elle entraîne une augmentation de l'atténuation acoustique grâce à l'effet de double cloison.

Par ailleurs, on sait que généralement les panneaux d'habillage sont fixés sur la structure de fuselage d'un hélicoptère au moyen de plots. Cette solution présente l'inconvénient de ne pas atténuer suffisamment le niveau de bruit, en raison des nombreux plots devant être utilisés à cet effet et de la proximité de certains plots par rapport au rotor principal d'avance et de sustentation de l'hélicoptère, qui est la source de bruit principale. Par ailleurs, une telle solution connue laisse souvent des interstices et discontinuités entre les panneaux d'habillage, ce qui procure bien entendu une isolation acoustique réduite.

Pour remédier au moins partiellement à ce problème de bruit, le document US-6 158 690 prévoit un ensemble structurel d'une partie d'aéronef, qui comprend :
- une structure externe qui correspond à une partie de la structure de fuselage de l'aéronef ;
- un ensemble d'habillage qui comporte une ossature rigide formée d'arcs qui sont maintenus ensemble par des traverses, ainsi que des panneaux d'habillage qui sont rapportés sur cette ossature ; et
- des moyens de liaison principaux, en l'occurrence des isolateurs, pour relier, par une fixation élastique ou liaison semi-rigide, l'ossature dudit ensemble d'habillage aux parois latérales de ladite structure externe.

Ces isolateurs comportent notamment des éléments, en particulier des anneaux, en élastomère, c'est-à-dire en un matériau élastique susceptible de réduire les vibrations, et sont agencés vers le bas des parois, pour être éloignés du plafond où se trouve, dans le cas de la cabine d'un aéronef à voilure tournante, le rotor d'avance et de sustentation qui est une source de bruit importante. Ces différentes caractéristiques des isolateurs permettent de réduire le bruit à l'intérieur de l'ensemble d'habillage.

Par ailleurs, ledit ensemble d'habillage est également maintenu par des moyens auxiliaires, par rapport à la structure externe, à savoir :
- en haut des parois, par des pare-chocs élastiques qui sont agencés de manière à être toujours en contact simultanément de l'ensemble d'habillage et de la structure externe, mais qui sont fixés uniquement sur la structure externe et qui sont simplement en contact de l'ensemble d'habillage ; et
- en bas, par des attaches élastiques (munies d'éléments isolateurs en élastomère) reliant l'ensemble d'habillage au plancher de la structure externe.

Toutefois, cet ensemble structurel connu, qui permet donc d'engendrer une réduction de bruit, présente plusieurs inconvénients :
- la réduction de bruit reste limitée, en particulier :
   · en raison des pare-chocs élastiques qui transmettent les vibrations de la structure externe à l'ossature de l'ensemble d'habillage puisqu'ils sont toujours en contact avec ces deux éléments, vibrations qui sont importantes dans la partie haute où se trouvent ces pare-chocs en raison de la proximité du rotor principal dans le cas d'un aéronef à voilure tournante et
   · en raison des isolateurs qui, bien qu'éloignés du rotor principal, se trouvent quand même à une certaine hauteur du plancher, et qui surtout agissent directement sur l'ossature qui, comme on le sait, favorise, de par sa réalisation (arcs reliés ensemble par des traverses pour former un ensemble rigide), la transmission des différentes vibrations sources de bruit ;
- les différents moyens de liaison (isolateurs) et de maintien (pare-chocs et attaches) présentent une durée de vie réduite, en raison de la présence de matière élastique (élastomère) ; et
- en cas de crash ou de choc violent, la retenue de l'ensemble d'habillage dans la partie haute est pour le moins incertaine, puisqu'aucune fixation n'est présente dans cette partie haute de l'ensemble d'habillage, l'efficacité des pare-chocs (qui sont uniquement fixés à la structure externe) étant bien entendu réduite et insuffisante dans une telle situation, ce qui peut entraîner des effets très dommageables.

La présente invention a pour objet de remédier à ces inconvénients. Elle concerne un ensemble structurel d'une partie d'un aéronef, notamment d'un aéronef à voilure tournante, qui permet notamment de réduire le bruit à l'intérieur de cet ensemble structurel.

A cette fin, selon l'invention, ledit ensemble structurel du type comportant :
- une structure externe qui correspond à une partie de la structure de l'aéronef et qui est munie d'un plancher ;
- un ensemble d'habillage comprenant une pluralité de panneaux d'habillage qui sont reliés entre eux de façon rigide de manière à former une enveloppe autoporteuse qui présente une forme telle qu'elle puisse être montée, avec un espace intermédiaire, à l'intérieur de ladite structure externe, ladite enveloppe autoporteuse étant agencée à l'intérieur de ladite structure externe et montée sur ledit plancher ; et
- un système de liaison pour lier ladite enveloppe autoporteuse à ladite structure externe,
est remarquable en ce que ledit système de liaison comporte une pluralité de moyens de liaison qui sont formés de manière à fixer, par des liaisons rigides et permanentes, ladite enveloppe autoporteuse à ladite structure externe et à réaliser cette fixation rigide et permanente exclusivement entre le plancher de la structure externe et des extrémités de panneaux d'habillage de ladite enveloppe autoporteuse.

Ainsi, selon l'invention, l'enveloppe autoporteuse est uniquement fixée (de façon rigide et permanente) au plancher, ce qui permet de réduire les moyens de transmission de vibrations et ainsi le bruit. De plus, comme dans le cas d'un aéronef à voilure tournante, le plancher est la partie la plus éloignée du rotor, les vibrations qui y apparaissent sont celles qui sont les plus atténuées.

En outre, comme cette liaison au niveau du plancher est rigide selon l'invention, elle est suffisante pour maintenir l'enveloppe autoporteuse de façon stable sur la structure externe, même si cette liaison est limitée à une seule zone de fixation (extrémité de l'enveloppe en regard du plancher). Une telle liaison n'aurait pas été suffisante avec les moyens de liaison (isolateurs) ou de maintien (attaches) connus qui sont prévus par le document US-6 158 690 précité, puisque tous ces moyens connus sont élastiques de sorte qu'au moins deux zones de fixation sont alors nécessaires pour obtenir un maintien stable.

La présente invention présente d'autres avantages, en particulier :
- un gain de durée de vie, en raison de la suppression de toute pièce en élastomère ;
- une réduction de la masse, en raison d'un nombre réduit de moyens de liaison ; et
- une réduction de la transmission des vibrations, en raison de la fixation des moyens de liaison directement sur des panneaux d'habillage de l'enveloppe autoporteuse, et non pas sur une ossature qui, comme indiqué précédemment, favorise la transmission des vibrations.

Dans un mode de réalisation préféré, au moins l'un desdits moyens de liaison comporte une cornière rigide à double branche, qui est fixée :
- par l'une de ses branches, au plancher de la structure externe ; et
- par l'autre branche, à un panneau d'habillage de l'enveloppe autoporteuse.

Dans le cadre de la présente invention, on entend par cornière une barre (notamment métallique) qui est composée de deux branches ou ailes assemblées ensemble à l'une de leurs extrémités, de préférence en forme de L.

En outre, de façon avantageuse, ledit système de liaison comporte, de plus, une pluralité de moyens de liaison auxiliaires qui sont formés de manière à créer, dans la partie haute de l'enveloppe autoporteuse qui est opposée à l'extrémité de l'enveloppe autoporteuse qui est en regard du plancher de la structure externe, des zones de liaison avec ladite structure externe qui sont telles qu'elles :
- permettent une liberté de mouvement relatif, dans tout l'espace, entre la structure externe et l'enveloppe autoporteuse, sur des distances prédéfinies ; et
- imposent, dans le cas d'un mouvement relatif entre la structure externe et l'enveloppe autoporteuse qui est supérieur à l'une au moins desdites distances prédéfinies et qui est situé dans au moins un plan prédéterminé de l'espace, un arrêt net dudit mouvement relatif.

Par conséquent, grâce à l'invention :
- dans le cas d'un fonctionnement normal, pour lequel le mouvement relatif entre la structure externe et l'enveloppe autoporteuse reste bien entendu très limité (et inférieur auxdites distances prédéfinies), la liberté de mouvement relatif est totale et il n'existe aucun contact entre la structure externe et l'enveloppe autoporteuse. Pour un tel fonctionnement normal, les moyens de liaison auxiliaires ne transmettent donc pas les vibrations sources de bruit et ne sont donc pas gênants ; et
- dans le cas d'un crash ou d'un choc violent entraînant un mouvement relatif important entre la structure externe et l'enveloppe autoporteuse, lesdits moyens de liaison auxiliaires imposent un arrêt net dudit mouvement relatif, c'est-à-dire engendrent une liaison rigide. Ceci permet notamment d'obtenir un ensemble structurel plus rigide dans une telle situation et ainsi d'empêcher des déformations trop importantes. On notera que, dans l'ensemble structurel divulgué par le document US-6 158 690, il n'existe aucune liaison rigide dans la partie haute de l'enveloppe, ce qui est bien entendu très pénalisant en cas de crash.

De façon avantageuse, ledit système de liaison comporte des moyens de liaison auxiliaires qui créent des zones de liaison entre des parois sensiblement verticales respectivement de la structure externe et de l'enveloppe autoporteuse dans ladite partie haute de l'enveloppe autoporteuse, et lesdites zones de liaison sont susceptibles d'imposer des arrêts dans un plan horizontal qui est orthogonal auxdites parois verticales.

Dans ce cas, de préférence, au moins l'un desdits moyens de liaison auxiliaires comporte :
- un pion muni d'une tête, qui est fixé sur un panneau d'habillage et
- une plaque qui est fixée sur la structure externe en regard dudit pion et qui est pourvue d'une ouverture coopérant avec la tête dudit pion.

Par ailleurs, avantageusement, ledit système de liaison comporte des moyens de liaison auxiliaires qui créent des zones de liaison entre des parois sensiblement horizontales respectivement de la structure externe et de l'enveloppe autoporteuse dans ladite partie haute de l'enveloppe autoporteuse, et lesdites zones de liaison sont susceptibles d'imposer des arrêts dans tout l'espace. Ceci permet de créer des zones de liaison au niveau du plafond de l'enveloppe autoporteuse, ce qui est contraire à l'enseignement du document US-6 158 690 qui ne prévoit aucune liaison au niveau du plafond.

De préférence, au moins l'un desdits moyens de liaison auxiliaires comporte :
- deux cornières coopérantes, dont l'une est fixée sur la structure externe et l'autre est fixée sur l'enveloppe autoporteuse, les branches libres de chacune de ces cornières étant agencées en regard l'une de l'autre et munies de trous en regard l'un de l'autre et
- une cheville qui traverse lesdits trous, qui présente un jeu prédéfini avec l'une desdites branches libres dans le plan de cette dernière, qui présente de plus un jeu longitudinalement selon son axe et qui est sans jeu avec l'autre branche libre.

Par ailleurs, de façon avantageuse, ladite enveloppe autoporteuse comporte des moyens d'assemblage d'au moins deux panneaux d'habillage, et chacun desdits moyens d'assemblage est formé de manière :
- à permettre un recouvrement partiel des deux panneaux assemblés sur une bande de jonction ;
- à assurer un jeu prédéfini dans toutes les directions du plan de ladite bande de jonction ; et
- à empêcher tout jeu dans la direction orthogonale audit plan de la bande de jonction.

Dans un mode de réalisation préféré, au moins l'un desdits moyens d'assemblage comporte :
- un ensemble de clip et pontet permettant un degré de liberté en translation sur une distance prédéfinie, suivant une première direction dudit plan de la bande de jonction ;
- une platine munie de trous oblongs qui coopèrent avec des vis, permettant un coulissement sur une distance prédéfinie suivant une seconde direction dudit plan de la bande de jonction qui est différente de ladite première direction ; et
- des moyens de calage assurant un contact en contrainte le long de la bande de jonction, suivant la direction qui est orthogonale au plan de la bande de jonction.

Ainsi, grâce à l'invention, on réduit le nombre de pièces (support, visserie, ...) pour le montage des panneaux d'habillage, ce qui permet d'obtenir un gain de masse, de réduire le coût, et de faciliter le montage et éventuellement le remplacement des différents panneaux d'habillage de l'enveloppe autoporteuse.

De plus, par le recouvrement des panneaux d'habillage conformément à l'invention, on supprime les interstices et les discontinuités, en particulier au plafond, et on améliore l'efficacité de l'insonorisation.

Les figures du dessin annexé feront bien comprendre comment l'invention peut être réalisée. Sur ces figures, des références identiques désignent des éléments semblables.

La figure 1 montre schématiquement selon une vue transversale un fuselage d'aéronef muni de la présente invention.

La figure 2 illustre schématiquement un mode de réalisation préféré de moyens de liaison conformes à l'invention.

Les figures 3 et 4 montrent schématiquement respectivement une vue en plan d'une plaque d'un premier moyen de liaison auxiliaire, et une vue transversale de ce premier moyen de liaison auxiliaire.

Les figures 5 et 6 montrent schématiquement respectivement une vue transversale et une vue partielle de dessus d'un second moyen de liaison auxiliaire.

La figure 7 illustre schématiquement un moyen d'assemblage conforme à l'invention de deux panneaux d'habillage.

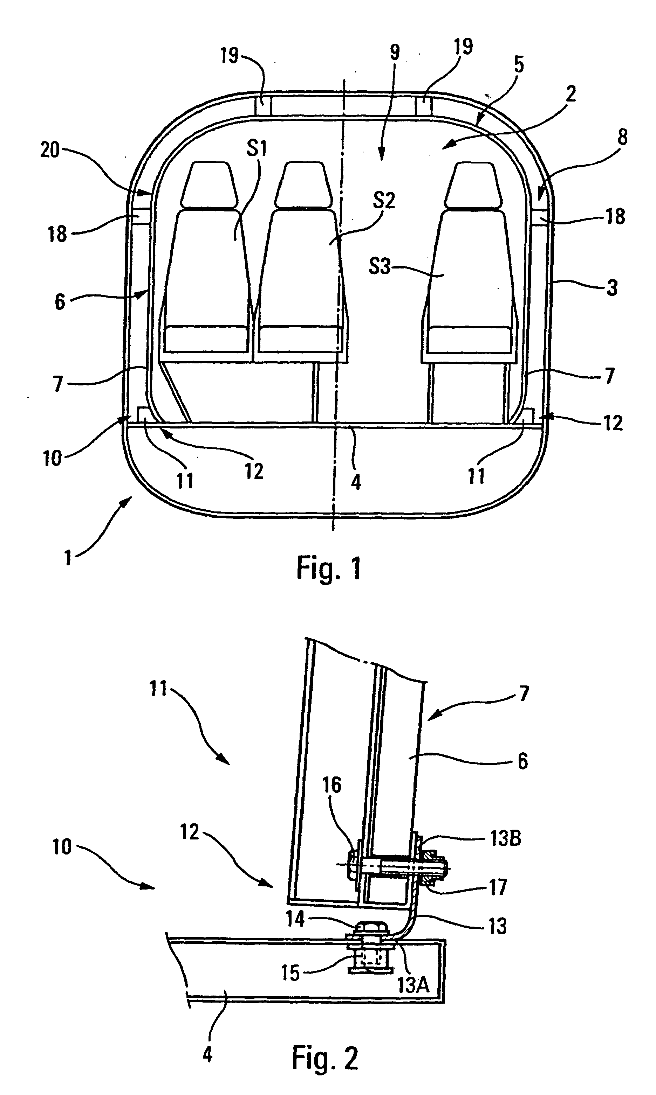

La présente invention concerne un ensemble structurel 1 d'une partie 2 d'un aéronef, notamment une partie destinée à être occupée par des personnes, telle que le poste de pilotage ou la cabine des passagers dudit aéronef. Cet aéronef peut être notamment un aéronef à voilure tournante et en particulier un hélicoptère. Sur la figure 1, on a représenté schématiquement cette partie 2 comme la cabine des passagers de l'aéronef, qui est munie de sièges S1, S2 et S3.

Ledit ensemble structurel 1 est du type à "double coque" comportant, de façon connue :
- une structure externe 3 qui correspond à une partie de la structure du fuselage de l'aéronef et qui est munie d'un plancher 4 ;
- un ensemble d'habillage 5 comprenant une pluralité de panneaux d'habillage 6 qui sont reliés entre eux de façon rigide de manière à former une enveloppe autoporteuse 7 qui présente une forme telle qu'elle puisse être montée, avec un espace intermédiaire 8 qui est de préférence libre et qui présente une distance comprise généralement entre un centimètre et vingt centimètres, à l'intérieur 9 de ladite structure externe 3. Ladite enveloppe autoporteuse 7 est agencée à l'intérieur de ladite structure externe 3 et montée sur ledit plancher 4 ; et
- un système de liaison 10 pour lier ladite enveloppe autoporteuse 7 à ladite structure externe 3.

Selon l'invention, ledit système de liaison 10 comporte une pluralité de moyens de liaison 11, qui sont formés de manière à fixer, par des liaisons rigides et permanentes, ladite enveloppe autoporteuse 7 à ladite structure externe 3 et à réaliser cette fixation rigide et permanente exclusivement entre le plancher 4 de la structure externe 3 et des extrémités 12 (reposant de préférence sur le plancher 4) de panneaux d'habillage 6 de ladite enveloppe autoporteuse 7.

Ainsi, grâce à l'invention, l'enveloppe autoporteuse 7 est uniquement fixée (de façon rigide et permanente) au plancher 4, ce qui permet de réduire les zones de transmission de vibrations et ainsi le bruit. De plus, comme dans le cas d'un aéronef à voilure tournante, le plancher 4 sur lequel est montée l'extrémité 12 de l'enveloppe autoporteuse 7 est la partie la plus éloignée du rotor (non représenté), les vibrations qui y existent sont celles qui sont les plus atténuées.

Par ailleurs, comme cette liaison au niveau du plancher 4 est rigide selon l'invention, elle est suffisante pour maintenir de façon stable l'enveloppe autoporteuse 7 sur la structure externe 3, même si cette liaison rigide est limitée à une unique zone de fixation (extrémité 12 de l'enveloppe 7 en regard du plancher 4).

L'ensemble structurel 1 conforme à la présente invention présente d'autres avantages, en particulier :
- une durée de vie plus longue, en raison de l'utilisation d'aucune pièce en élastomère ;
- une réduction de la masse, en raison d'un nombre réduit de moyens de liaison 11 ;
- une réduction de la transmission des vibrations, en raison de la fixation des moyens de liaison 11 directement sur des panneaux d'habillage 6 de l'enveloppe autoporteuse 7, et non pas sur une ossature qui, comme indiqué précédemment, favorise la transmission des vibrations ; et surtout
- une réduction du bruit due à un effet de double coque (structure externe 3 et enveloppe 7) ou double cloison obtenue grâce à l'invention. Cet effet avantageux est dû notamment au fait que l'atténuation acoustique apportée par deux panneaux de masse surfacique Ms1 et Ms2 (kg/m²) est supérieure dans un large domaine de fréquences à l'atténuation acoustique d'un seul panneau de masse surfacique totale Ms1 + Ms2.

Les performances d'isolation acoustique d'une double coque reposent sur l'absence de contacts mécaniques entre la structure du fuselage et les panneaux d'habillage, hormis à l'extrémité 12. L'excitation résiduelle de l'ensemble des habillages internes formant cette double coque est alors purement acoustique. Les excitations solidiennes provenant des points d'attache sur le fuselage (plafond cabine, partie supérieure des cadres forts et des parois latérales du fuselage, ...) sont supprimées. Il n'existe plus de court-circuit vibratoire qui limite l'atténuation acoustique globale des habillages lorsqu'ils sont fixés directement sur la structure.

La conséquence directe de l'application du concept de "double coque" dans un aéronef à voilure tournante est :
- une diminution du bruit en cabine pour tous les bruits extérieurs à la cabine (sons purs et large bande), supérieure à celle obtenue avec les habillages usuels, et ce dans une large gamme de fréquences ;
- un gain de masse sur l'ensemble des panneaux d'habillage ;
- une amélioration de l'étanchéité entraînant une réduction significative des fuites acoustiques et donc des sources de bruit locales.

Dans un mode de réalisation particulier, lesdits moyens de liaison 11 comportent chacun, comme représenté sur la figure 2, une cornière rigide 13 à double branche 13A et 13B, de type connu, qui est fixée :
- par l'une 13A de ses branches au plancher 4 de la structure externe 3 par des moyens connus, par exemple un ensemble vis 14 / écrou 15 ; et
- par l'autre 13B branche à un panneau d'habillage 6 de l'enveloppe autoporteuse 7, également par des moyens connus, tels qu'un ensemble vis 16 / écrou 17 notamment.

Dans le mode de réalisation de la figure 2, l'enveloppe 7 n'est pas directement en contact avec la structure 3 au niveau du plancher 4. Toutefois, dans un mode de réalisation préféré non représenté, l'enveloppe 7 repose directement sur le plancher 4, ce qui permet d'améliorer la stabilité de ladite enveloppe 7. Dans ce cas, les moyens de liaison 11 sont adaptés à la position des éléments à fixer ensemble.

Selon l'invention, ledit système de liaison 10 comporte, de plus, une pluralité de moyens de liaison auxiliaires 18, 19 qui sont formés de manière à créer, dans la partie haute 20 de l'enveloppe autoporteuse 7 qui est opposée à l'extrémité de l'enveloppe autoporteuse 7 qui est en regard du plancher 4 de la structure externe 3, des zones de liaison avec ladite structure externe 3 qui sont telles qu'elles :
- permettent une liberté de mouvement relatif, dans tout l'espace, entre la structure externe 3 et l'enveloppe autoporteuse 7, sur des distances prédéfinies, de préférence inférieures à quatre millimètres ; et
- imposent, dans le cas d'un mouvement relatif entre la structure externe 3 et l'enveloppe autoporteuse 7 qui est supérieur à au moins l'une desdites distances prédéfinies et qui est situé dans au moins un plan prédéterminé de l'espace, un arrêt net dudit mouvement relatif.

Par conséquent, grâce à l'invention :
- dans le cas d'un fonctionnement normal de l'aéronef sans secousses excessives, pour lequel le mouvement relatif entre la structure externe 3 et l'enveloppe autoporteuse 7 reste bien entendu très limité (et inférieur auxdites distances prédéfinies), la liberté de mouvement relatif au niveau des moyens de liaison auxiliaires 18, 19 est totale et il n'existe aucun contact entre la structure externe 3 et l'enveloppe autoporteuse 7. Pour un tel fonctionnement normal et habituel, les moyens de liaison auxiliaires 18, 19 ne transmettent donc pas les vibrations sources de bruit et ne sont donc pas gênants ; et
- dans le cas d'un crash ou d'un choc violent entraînant un mouvement relatif important entre la structure externe 3 et l'enveloppe autoporteuse 7, lesdits moyens de liaison auxiliaires 18, 19 imposent un arrêt net dudit mouvement relatif, c'est-à-dire engendrent une liaison rigide. Ceci permet notamment d'obtenir un ensemble structurel 1 plus rigide dans ce cas et ainsi d'empêcher des déformations importantes.

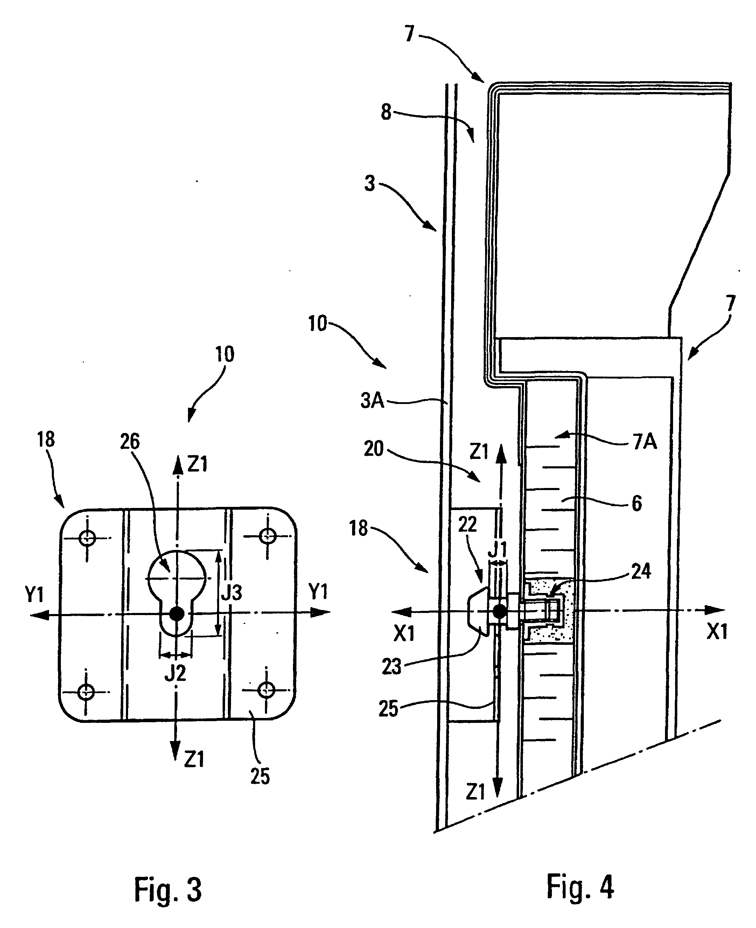

Pour ce faire, ledit système de liaison 10 comporte, premièrement, des moyens de liaison auxiliaires 18 qui créent des zones de liaison entre des parois verticales 3A et 7A respectivement de la structure externe 3 et de l'enveloppe autoporteuse 7 dans ladite partie haute 20 de l'enveloppe 7, et lesdites zones de liaison sont susceptibles d'imposer des arrêts dans un plan horizontal qui est orthogonal auxdites parois verticales 3A, 7A. Dans l'exemple représenté sur les figures 3 et 4, ce plan horizontal est formé par des directions X1-X1 et Y1-Y1 et les parois verticales 3A et 7A sont parallèles à un plan vertical formé par des directions Y1-Y1 et Z1-Z1.

Dans le mode de réalisation préféré représenté sur les figures 3 et 4, un moyen de liaison auxiliaire 18 comporte :
- un pion 22 munie d'une tête 23 large, qui est fixé sur un panneau d'habillage 6 par des moyens connus 24 ; et
- une plaque 25 qui est fixée à l'intérieur sur la structure externe 3 en regard dudit pion 22 et qui coopère avec ce dernier. A cet effet, ladite plaque 25 est munie d'une ouverture 26 comprenant une partie ronde, de diamètre supérieur au diamètre de la tête 23 du pion 22, et une partie oblongue (qui est pratiquée selon la direction verticale Z1-Z1) de largeur inférieure au diamètre de la tête 23 du pion 22, les deux parties ronde et oblongue étant attenantes.

Grâce à ce mode de réalisation, le pion 22 et donc l'enveloppe 7 peuvent se déplacer par rapport à la plaque 25 et donc à la structure externe 3 :
- d'un jeu J1 réduit dans la direction X1-X1 ;
- d'un jeu J2 réduit dans la direction Y1-Y1 ; et
- d'un jeu J3 beaucoup plus important dans la direction Z1-Z1.

Lesdits jeux J1 et J2 représentent les distances prédéfinies précitées et sont, de préférence, de l'ordre de quelques millimètres, le jeu J3 étant beaucoup plus grand.

A titre d'exemple, les jeux J1 et J2 sont inférieurs à quatre millimètres et le jeu J3 est égal ou supérieur à la somme des diamètres de la tête 23 du pion 22 et du corps cylindrique dudit pion 22 situé sous ladite tête 23.

Ainsi, grâce à l'invention, des points de fixation, sans contraintes au repos, servent à assurer la sécurité en cas de crash ou de choc violent avec une liberté sur les trois axes (X1-X1, Y1-Y1, Z1-Z1) en statique, mais des butées (ou arrêts) franches lors d'une sollicitation dynamique sur au moins l'un de deux axes (X1-X1, Y1-Y1).

Deuxièmement, ledit système de liaison 10 comporte également des moyens de liaison auxiliaires 19 qui créent des zones de liaison entre des parois sensiblement horizontales 3B et 7B respectivement de la structure externe 3 et de l'enveloppe autoporteuse 7 dans ladite partie haute 20 de l'enveloppe 7, c'est-à-dire au niveau du plafond, et lesdites zones de liaison sont susceptibles d'imposer des arrêts dans tout l'espace.

Ceci permet de créer des zones de liaison rigide au niveau du plafond en cas de crash ou de choc violent. Bien entendu, comme indiqué précédemment, en cas de fonctionnement normal, les moyens de liaison auxiliaires 19 (comme les moyens auxiliaires 18) ne réalisent aucun contact et autorisent une liberté totale de mouvement relatif de sorte que, dans ce cas, l'enveloppe 7 est fixée sur la structure 3 uniquement au niveau du plancher 4 par l'intermédiaire des moyens de liaison 11.

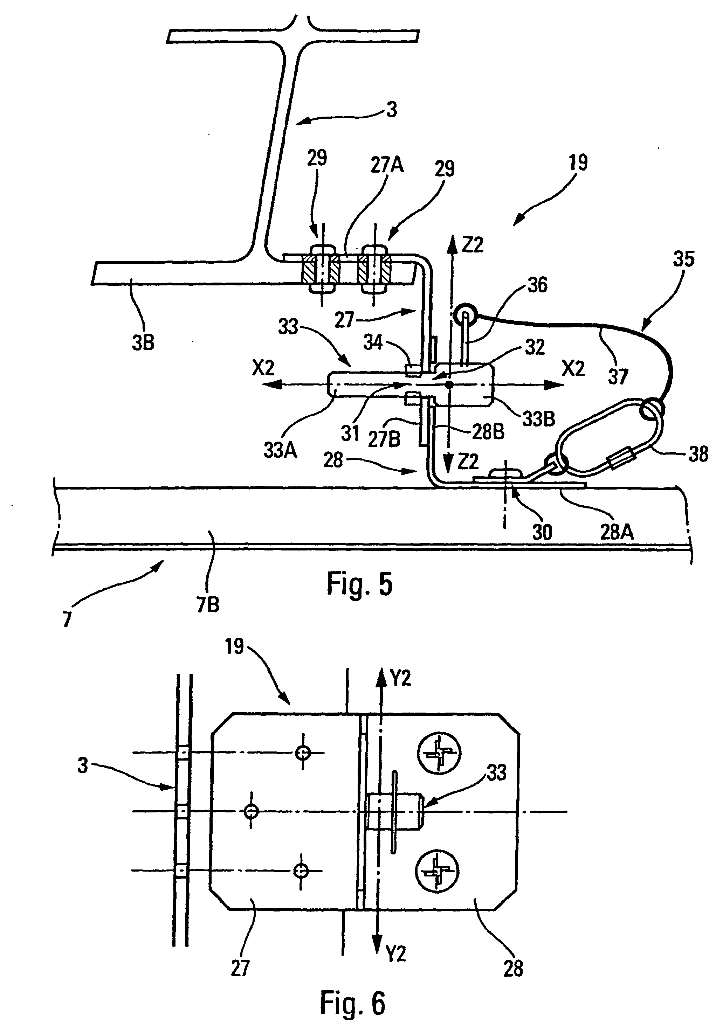

Dans le mode de réalisation préféré représenté sur les figures 5 et 6, un moyen de liaison 19 comporte :
- deux cornières 27, 28 coopérantes, dont l'une 27 est fixée par une branche 27A sur la structure externe 3 par des moyens connus 29, par exemple des ensembles vis/écrou, et l'autre 28 est fixée par une branche 28A sur l'enveloppe autoporteuse 7, également par des moyens connus 30, de préférence des ensembles vis/écrou, les branches libres 27B, 28B de chacune de ces cornières 27 et 28 étant agencées en regard l'une de l'autre et munies chacune d'un trou 31 et 32, les deux trous 31 et 32 étant en regard l'un de l'autre et
- une cheville 33 qui traverse lesdits trous 31 et 32.

La cheville 33 comporte un premier tronçon cylindrique 33A présentant un diamètre qui est adapté au diamètre du trou 31 et un second tronçon cylindrique 33B raccordé audit premier tronçon 33A et présentant un diamètre qui est supérieur au diamètre du trou 32.

Comme on peut le voir sur la figure 5, le trou 32 présente un diamètre important de manière à engendrer un jeu (de préférence inférieur à quatre millimètres) autour du tronçon 33A, ce qui permet un mouvement relatif entre, d'une part, la cornière 28 et, d'autre part, la cheville 33 et donc la cornière 27 (sur laquelle est fixée la cheville 33 par l'intermédiaire d'un clip 34), dans un plan vertical formé par des directions Y2-Y2 et Z2-Z2. Comme on peut également le voir sur la figure 5, le clip 34 est fixé à une distance telle du tronçon 33B qu'il autorise un jeu ou un déplacement (de préférence inférieur à cinq millimètres) dans une direction longitudinale X2-X2.

On a de plus représenté sur la figure 5 des moyens 35, 36, 37 et 38 qui sont destinés à lier la cheville 33 au panneau d'habillage correspondant pour laisser ladite cheville 33 solidaire dudit panneau lors du démontage.

Ainsi, grâce à l'invention, des points de fixation, sans contraintes au repos, servent à assurer la sécurité en cas de crash ou de choc violent avec une liberté sur les trois axes (X2-X2, Y2-Y2 et Z2-Z2) en statique, mais des butées franches lors d'une sollicitation dynamique sur au moins l'un desdits trois axes.

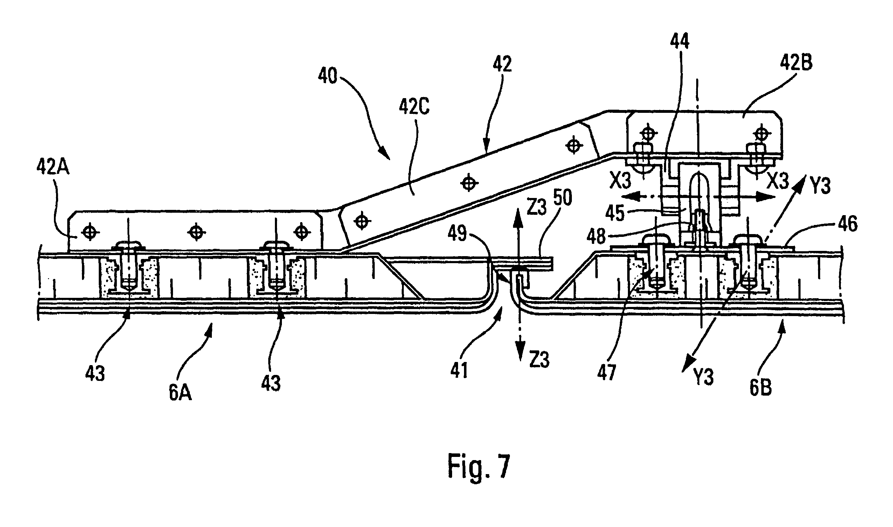

Par ailleurs, selon l'invention, deux panneaux d'habillage 6A, 6B sont reliés ensemble par l'intermédiaire de moyens d'assemblage 40, chacun desdits moyens d'assemblage 40 étant formé de manière :
- à permettre un recouvrement partiel des deux panneaux assemblés 6A et 6B sur une bande de jonction 41 ;
- à assurer un jeu prédéfini (de préférence inférieur à cinq millimètres) dans toutes les directions du plan (défini par des directions X3-X3 et Y3-Y3 sur la figure 7) de ladite bande de jonction 41 ; et
- à empêcher tout jeu dans la direction Z3-Z3 orthogonale audit plan de la bande de jonction 41.

Ainsi, grâce à l'invention, on réduit le nombre de pièces (support, visserie, ...) pour le montage des panneaux d'habillage 6A, 6B, ce qui permet d'obtenir un gain de masse, de réduire le coût, et de faciliter le montage et éventuellement le remplacement des panneaux d'habillage 6A, 6B.

De plus, par le recouvrement des panneaux d'habillage 6, 6A, 6B conformément à l'invention, on supprime les interstices et les discontinuités, en particulier au plafond, et on améliore l'efficacité de l'insonorisation.

De plus, selon l'invention, on privilégie des panneaux d'habillage avec des surfaces importantes, notamment pour limiter le nombre de bandes de jonction 41. Ceci permet d'accroître la rigidité en flexion et en torsion de l'enveloppe 7, ainsi que l'étanchéité acoustique.

Dans un mode de réalisation préféré représenté sur la figure 7, le moyen d'assemblage 40 comporte un bras 42 comprenant trois branches 42A, 42B et 42C raccordées ensemble, dont une branche d'extrémité 42A est fixée par des moyens connus 43 sur le panneau 6A et dont l'autre branche d'extrémité 42B est écartée du panneau 6B et comporte des moyens pour lier ledit bras 42 à ce dernier. Ces moyens comprennent :
- un ensemble qui est muni d'un pontet 44 fixé sur l'extrémité 42B du bras 42 et d'un clip 45 monté sur ce pontet 44, et qui permet un degré de liberté en translation sur une distance prédéfinie suivant la direction X3-X3 dudit plan de la bande de jonction 41 ; et
- une platine 46 qui est munie de trous oblongs coopérant avec des vis fixées 47 sur le panneau 6B et d'une vis 48 solidaire du clip 44, et qui permet un coulissement sur une distance prédéfinie suivant la direction Y3-Y3.

Comme on peut le voir sur la figure 7, la bande de jonction 41 est formée par la mise en contact d'une extrémité 49 recourbée du panneau 6B avec une extrémité 50 plane du panneau 6A.

Selon l'invention, les moyens d'assemblage 40 assurent un contact en contrainte de ces deux extrémités 49 et 50 le long de la bande de jonction 41, suivant la direction Z3-Z3 qui est orthogonale au plan de ladite bande de jonction 41.

On notera que les moyens d'assemblage 40 peuvent être appliqués notamment sur :
- des panneaux sandwich et/ou des panneaux monolithiques même minces ;
- des panneaux plans et/ou incurvés dans une ou deux directions.

La présente invention décrite précédemment permet de réduire, en particulier, les bruits suivants d'un aéronef à voilure tournante :
- le bruit d'engrènement ou de roulement provenant des boîtes de transmission (BTP, BTI, BTA) ;
- le bruit d'engrènement ou de roulement des boîtiers accessoires (pompes de lubrification, entraînement de groupe de ventilation, climatisation, ...) ;
- le bruit d'entrée d'air moteur ou BTP ;
- le bruit de ventilation ;
- le bruit de chauffage ; et
- le bruit de climatisation.

## Revendications

1. Ensemble structurel d'une partie d'un aéronef, notamment d'un hélicoptère, comportant :
- une structure externe (3) qui correspond à une partie de la structure de l'aéronef et qui est munie d'un plancher (4) ;
- un ensemble d'habillage (5) comprenant une pluralité de panneaux d'habillage (6) qui sont reliés entre eux de façon rigide de manière à former une enveloppe autoporteuse (7) qui présente une forme telle qu'elle puisse être montée, avec un espace intermédiaire (8), à l'intérieur de ladite structure externe (3), ladite enveloppe autoporteuse (7) étant agencée à l'intérieur (9) de ladite structure externe (3) et montée sur ledit plancher (4) ; et
- un système de liaison (10) pour lier ladite enveloppe autoporteuse (7) à ladite structure externe (3),
**caractérisé en ce que** ledit système de liaison (10) comporte une pluralité de moyens de liaison (11) qui sont formés de manière à fixer, par des liaisons rigides et permanentes, ladite enveloppe autoporteuse (7) à ladite structure externe (3) et à réaliser cette fixation rigide et permanente exclusivement entre le plancher (4) de la structure externe (3) et des extrémités (12) de panneaux d'habillage (6) de ladite enveloppe autoporteuse (7).

2. Ensemble structurel selon la revendication 1,
**caractérisé en ce qu'**au moins l'un desdits moyens de liaison (11) comporte une cornière rigide (13) à double branche (13A, 13B) qui est fixée :
- par l'une (13A) de ses branches (13A, 13B) au plancher (4) de la structure externe (3) ; et
- par l'autre branche (13B) à un panneau d'habillage (6) de l'enveloppe autoporteuse (7).

3. Ensemble structurel selon l'une des revendications 1 et 2,
**caractérisé en ce que** ledit système de liaison (10) comporte, de plus, une pluralité de moyens de liaison auxiliaires (18, 19) qui sont formés de manière à créer, dans la partie haute (20) de l'enveloppe autoporteuse (7) qui est opposée à l'extrémité (12) de l'enveloppe autoporteuse (7) qui est en regard du plancher (4) de la structure externe (3), des zones de liaison avec ladite structure externe (3) qui sont telles qu'elles :
- permettent une liberté de mouvement relatif, dans tout l'espace, entre la structure externe (3) et l'enveloppe autoporteuse (7), sur des distances prédéfinies (J1, J2, J3) ; et
- imposent, dans le cas d'un mouvement relatif entre la structure externe (3) et l'enveloppe autoporteuse (7) qui est supérieur à l'une au moins desdites distances prédéfinies (J1, J2) et qui est situé dans au moins un plan prédéterminé de l'espace, un arrêt net dudit mouvement relatif.

4. Ensemble structurel selon la revendication 3, **caractérisé en ce que** ledit système de liaison (10) comporte des moyens de liaison auxiliaires (18) qui créent des zones de liaison entre des parois sensiblement verticales (3A, 7A) respectivement de la structure externe (3) et de l'enveloppe autoporteuse (7) dans ladite partie haute (20) de l'enveloppe autoporteuse (7), et **en ce que** lesdites zones de liaison sont susceptibles d'imposer des arrêts dans un plan horizontal qui est orthogonal auxdites parois verticales (3A, 7A).

5. Ensemble structurel selon la revendication 4,
**caractérisé en ce qu'**au moins l'un desdits moyens de liaison auxiliaires (18) comporte :
- un pion (22) muni d'une tête (23), qui est fixé sur un panneau d'habillage (6) ; et
- une plaque (25) qui est fixée sur la structure externe (3) en regard dudit pion (22) et qui est pourvue d'une ouverture (26) coopérant avec la tête (23) dudit pion (22).

6. Ensemble structurel selon la revendication 3, **caractérisé en ce que** ledit système de liaison (10) comporte des moyens de liaison auxiliaires (19) qui créent des zones de liaison entre des parois (3B, 7B) sensiblement horizontales respectivement de la structure externe (3) et de l'enveloppe autoporteuse (7) dans ladite partie haute (20) de l'enveloppe autoporteuse (7), et **en ce que** lesdites zones de liaison sont susceptibles d'imposer des arrêts dans tout l'espace.

7. Ensemble structurel selon la revendication 6,
**caractérisé en ce qu'**au moins l'un desdits moyens de liaison auxiliaires (19) comporte :
- deux cornières (27, 28) coopérantes, dont l'une (27) est fixée sur la structure externe (3) et l'autre (28) est fixée sur l'enveloppe autoporteuse (7), les branches libres (27B, 28B) de chacune de ces cornières (27, 28) étant agencées en regard l'une de l'autre et munies de trous (31, 32) en regard l'un de l'autre ; et
- une cheville (33) qui traverse lesdits trous (31, 32), qui présente un jeu prédéfini avec l'une (28B) desdites branches libres (27B, 28B) dans le plan de cette dernière, qui présente de plus un jeu longitudinalement selon son axe et qui est sans jeu avec l'autre branche libre (27B).

8. Ensemble structurel selon l'une quelconque des revendications précédentes,
**caractérisé en ce que** ladite enveloppe autoporteuse (7) comporte des moyens d'assemblage (40) d'au moins deux panneaux d'habillage (6A, 6B), et **en ce que** chacun desdits moyens d'assemblage (40) est formé de manière :
- à permettre un recouvrement partiel des deux panneaux assemblés (6A, 6B) sur une bande de jonction (41) ;
- à assurer un jeu prédéfini dans toutes les directions (X3-X3, Y3-Y3) du plan de ladite bande de jonction (41) ; et
- à empêcher tout jeu dans la direction (Z3-Z3) orthogonale audit plan de la bande de jonction (41).

9. Ensemble structurel selon la revendication 8,
**caractérisé en ce qu'**au moins l'un desdits moyens d'assemblage (40) comporte :
- un ensemble de clip (45) et pontet (44) permettant un degré de liberté en translation sur une distance prédéfinie, suivant une première direction (X3-X3) dudit plan de la bande de fonction (41) ;
- une platine (46) munie de trous oblongs qui coopèrent avec des vis (47), permettant un coulissement sur une distance prédéfinie suivant une seconde direction (Y3-Y3) dudit plan de la bande de jonction qui est différente de ladite première direction (X3-X3) ; et
- des moyens de calage (42) assurant un contact en contrainte le long de la bande de jonction (41), suivant la direction (Z3-Z3) qui est orthogonale au plan de la bande de jonction (41).

10. Aéronef, en particulier un hélicoptère,
**caractérisé en ce qu'**il comporte un ensemble structurel (1) tel que celui spécifié sous l'une quelconque des revendications 1 à 9.

## Patentansprüche

1. Strukturelement eines Teils eines Luftfahrzeugs, insbesondere eines Hubschraubers, bestehend aus:
- einer äußeren Struktur (3), die einem Teil der Struktur des Luftfahrzeugs entspricht und über eine Bodenplatte (4) verfügt;
- einer Verkleidung (5), die aus einer Vielzahl an Verkleidungsplatten (6) besteht, die starr miteinander verbunden sind, so dass sie eine selbsttragende Kabine (7) bilden, die derart gestaltet ist, dass sie mit einem Zwischenraum (8) innerhalb der äußeren Struktur (3) angebracht werden kann, wobei die selbsttragende Kabine (7) in den Innenraum (9) der äußeren Struktur (3) eingebaut und auf der Bodenplatte (4) angebracht wird; und
- einem Verbindungssystem (10), um die selbsttragende Kabine (7) an der äußeren Struktur (3) zu befestigen,
**dadurch gekennzeichnet, dass** das Verbindungssystem (10) eine Vielzahl an Verbindungsvorrichtungen (11) aufweist, die derart gestaltet sind, dass sie durch starre und dauerhafte Verbindungen die selbsttragende Kabine (7) an der äußeren Struktur befestigen, und dass dabei ausschließlich die Bodenplatte (4) der äußeren Struktur (3) und Kanten (12) der Verkleidungsplatten (6) der selbsttragenden Kabine (7) starr und dauerhaft aneinander befestigt werden.

2. Strukturelement gemäß Anspruch 1,
**dadurch gekennzeichnet, dass** mindestens eine der Verbindungsvorrichtungen (11) ein starres Winkeleisen (13) mit zwei Schenkeln (13A, 13B) aufweist, das
- mit einem (13A) seiner Schenkel (13A, 13B) an der Bodenplatte (4) der äußeren Struktur (3); und
- mit dem anderen Schenkel (13B) an einer Verkleidungsplatte (6) der selbsttragenden Kabine (7)
befestigt ist.

3. Strukturelement gemäß einem der Ansprüche 1 und 2,
**dadurch gekennzeichnet, dass** das Verbindungssystem (10) außerdem eine Vielzahl an zusätzlichen Verbindungsvorrichtungen (18, 19) aufweist, die derart gestaltet sind, dass sie im oberen Bereich (20) der selbsttragenden Kabine (7), fern von der Bodenkante (12) der selbsttragenden Kabine (7), die an die Bodenplatte (4) der äußeren Struktur (3) anschließt, Verbindungsstellen mit der äußeren Struktur (3) herstellen, die so beschaffen sind, dass sie:
- im gesamten Raum relative Bewegungen zwischen der äußeren Struktur (3) und der selbsttragenden Kabine (7) von vordefinierten Längen (J1, J2, J3) zulassen; und
- bei relativen Bewegungen zwischen der äußeren Struktur (3) und der selbsttragenden Kabine (7), die größer als mindestens eine der vordefinierten Längen (J1, J2) sind und auf mindestens einer zuvor festgelegten Ebene im Raum stattfinden, den sofortigen Abbruch der relativen Bewegung bewirken.

4. Strukturelement gemäß Anspruch 3,
**dadurch gekennzeichnet, dass** das Verbindungssystem (10) zusätzliche Verbindungsvorrichtungen (18) aufweist, die zwischen tatsächlich vertikalen Wänden (3A, 7A) der äußeren Struktur (3) beziehungsweise der selbsttragenden Kabine (7) im oberen Bereich (20) der selbsttragenden Kabine (7) Verbindungsstellen herstellen, und dass diese Verbindungsstellen den Abbruch relativer Bewegungen auf einer horizontalen Ebene, die orthogonal zu den vertikalen Wänden (3A, 7A) ist, bewirken können.

5. Strukturelement gemäß Anspruch 4,
**dadurch gekennzeichnet, dass** mindestens eine der zusätzlichen Verbindungsvorrichtungen (18) folgende Teile aufweist:
- einen Stift (22) mit einem Kopf (23), der an einer Verkleidungsplatte (6) befestigt ist; und
- eine Platte (25), die an der äußeren Struktur (3) gegenüber des Stifts (22) befestigt ist und über eine Öffnung (26) verfügt, in die der Kopf (23) des Stifts (22) hineinpasst.

6. Strukturelement gemäß Anspruch 3,
**dadurch gekennzeichnet, dass** das Verbindungssystem (10) zusätzliche Verbindungsvorrichtungen (19) aufweist, die zwischen tatsächlich horizontalen Wänden (38, 7B) der äußeren Struktur (3) beziehungsweise der selbsttragenden Kabine (7) im oberen Bereich (20) der selbsttragenden Kabine (7) Verbindungsstellen herstellen, und dass diese Verbindungsstellen im gesamten Raum den Abbruch relativer Bewegungen bewirken können.

7. Strukturelement gemäß Anspruch 6,
**dadurch gekennzeichnet, dass** mindestens eine der zusätzlichen Verbindungsvorrichtungen (19) folgende Teile aufweist:
- zwei zusammengehörige Winkeleisen (27, 28), von denen das eine (27) an der äußeren Struktur (3) und das andere (28) an der selbsttragenden Kabine (7) befestigt ist, wobei die jeweils freien Schenkel (27B, 28B) der beiden Winkel (27, 28) aneinander anliegen und ihre Bohrungen (31, 32) übereinander liegen; und
- ein Dübel (33), der in diese Bohrungen (31, 32) gesteckt wird, der mit einem (28B) der freien Schenkel (278, 288) auf dessen Ebene ein vordefiniertes Maß an Spiel hat, der außerdem in der Richtung seiner Längsachse Spiel hat, und der mit dem anderen freien Schenkel (27B) kein Spiel hat.

8. Strukturelement gemäß einem der vorstehenden Ansprüche,
**dadurch gekennzeichnet, dass** die selbsttragende Kabine (7) an mindestens zwei Verkleidungsplatten (6A, 6B) Montagemittel (40) aufweist, und dass jedes dieser Montagemittel (40) derart gestaltet ist, dass:
- sich die beiden montierten Verkleidungsplatten (6A, 6B) auf einem Fugenband (41) teilweise überdecken;
- ein vordefiniertes Spiel in allen Richtungen (X3-X3, Y3-Y3) der Ebene des Fugenbands (41) gewährleistet ist; und
- in orthogonaler Richtung (Z3-Z3) zur Ebene des Fugenbands (41) keinerlei Spiel gegeben ist.

9. Strukturelement gemäß Anspruch 8,
**dadurch gekennzeichnet, dass** mindestens eines der Montagemittel (40) folgende Teile aufweist:
- eine Einheit aus Clip (45) und Bügel (44), die auf einer vordefinierten Länge in einer ersten Richtung (X3-X3) der Ebene des Fugenbands (41) bis zu einem gewissen Grad Verschiebungen zulässt;
- eine Unterlegplatte (46) mit zu den Schrauben (47) passenden Langlöchern, die auf einer vordefinierten Länge in einer zweiten Richtung (Y3-Y3) der Ebene des Fugenbands, die sich von der ersten Richtung (X3-X3) unterscheidet, Gleitbewegungen zulässt; und
- Positioniervorrichtungen (42), die auf das Fugenband (41) in orthogonaler Richtung (Z3-Z3) zur Ebene des Fugenbands (41) Druck ausüben.

10. Luftfahrzeug, insbesondere ein Hubschrauber,
**dadurch gekennzeichnet, dass** er ein Strukturelement (1) aufweist, in der Art, wie es unter einem der Ansprüche 1 bis 9 beschrieben wird.

## Claims

1. Structural assembly of part of an aircraft, particularly a helicopter, comprising:
- an external structure (3) which corresponds to part of the structure of the aircraft and is equipped with a floor (4);
- a cladding assembly (5) comprising a number of cladding panels (6) which are joined together rigidly so as to form a self-supporting envelope (7) which has a shape such that it can be mounted, with an intermediate space (8), inside said outer structure (3), said self-supporting envelope (7) being arranged on the inside (9) of said outer structure (3) and mounted on said floor (4); and
- a connecting system (10) for connecting said self-supporting envelope (7) to said outer structure (3),
**characterized in that** said connecting system (10) comprises a number of connecting means (11) which are formed in such a way as to fix said self-supporting envelope (7) to said outer structure (3) by rigid and permanent connections and to perform this rigid and permanent fixing exclusively between the floor (4) of the outer structure (3) and ends (12) of cladding panels (6) of said self-supporting envelope (7).

2. Structural assembly according to Claim 1, **characterized in that** at least one of said connecting means (11) comprises a rigid angle bracket (13) with two legs (13A, 13B), which is fixed:
- by one (13A) of its legs (13A, 13B) to the floor (14) of the outer structure(3); and
- by the other leg (13B), to a cladding panel (6) of the self-supporting envelope (7).

3. Structural assembly according to either of Claims 1 and 2, **characterized in that** said connecting system (10) additionally comprises a number of auxiliary connecting means (18, 19) which are formed in such a way as to create, in the upper part (20) of the self-supporting envelope (7) which is at the opposite end to the end (12) of the self-supporting envelope (7) which faces the floor (4) of the outer structure (3), regions of connection with said outer structure (3) which are such that they :
- allow a freedom of relative movement, throughout space, between the outer structure (3) and the self-supporting envelope (7), over predefined distances (J1, J2, J3); and
- in the case of a relative movement between the outer structure (3) and the self-supporting envelope (7) which exceeds at least one of said predefined distances (J1, J2) and which is in at least one predetermined plane in space, stop said relative movement outright.

4. Structural assembly according to Claim 3, **characterized in that** said connecting system (10) comprises auxiliary connecting means (18) which create regions of connection between practically vertical walls (3A, 7A) of the outer structure (3) and of the self-supporting envelope (7) respectively, in said upper part (20) of the self-supporting envelope (7) and **in that** said regions of connection are able to perform stopping in a horizontal plane which is orthogonal to said vertical walls (3A, 7A).

5. Structural assembly according to Claim 4, **characterized in that** at least one of said auxiliary connecting means (18) comprises:
- a stud (22) equipped with a head (23), which stud is fixed to a cladding panel (6); and
- a plate (25) which is fixed to the outer structure (3) facing said stud (22) and which is provided with an opening (26) collaborating with the head (23) of said stud (22).

6. Structural assembly according to Claim 3, **characterized in that** said connecting system (10) comprises auxiliary connecting means (19) which create regions of connection between practically horizontal walls (3B, 7B) of the outer structure (3) and of the self-supporting envelope (7) respectively, in said upper part (20) of the self-supporting envelope (7) and **in that** said regions of connection are able to perform stopping throughout space.

7. Structural assembly according to Claim 6, **characterized in that** at least one of said auxiliary connecting means (19) comprises:
- two collaborating angle brackets (27, 28) of which one (27) is fixed to the outer structure (3) and the other (28) is fixed to the self-supporting envelope (7), the free legs (27B, 28B) of each of these angle brackets (27, 28) being arranged facing one another and being equipped with holes (31, 32) facing one another; and
- a peg (33) which passes through said holes (31, 32), which has a predefined amount of clearance with respect to one (28B) of said free legs (27B, 28B) in the plane thereof, which also has clearance longitudinally along its axis and which has no clearance with respect to the other free leg (27B).

8. Structural assembly according to any one of the preceding Claims, **characterized in that** said self-supporting envelope (7) comprises means (40) of assembly of at least two cladding panels (6A, 6B) and **in that** each of said assembly means (40) is formed in such a way:
- as to allow partial overlap of the two assembled panels (6A, 6B) along a joining strip (41);
- as to provide a predefined amount of clearance in all the directions (X3-X3, Y3-Y3) of the plane of said joining strip (41); and
- as to prevent any clearance in the direction (Z3-Z3) orthogonal to said plane of the joining strip (41).

9. Structural assembly according to Claim 8, **characterized in that** at least one of said assembly means (40) comprises:
- a clip (45) and bridging piece (44) assembly allowing a degree of freedom in translation over a predefined distance in a first direction (X3-X3) of said plane of the function strip (41);
- a mounting plate (46) with oblong holes which collaborate with screws (47) allowing sliding over a predefined distance in a second direction (Y3-Y3) of said plane of the joining strip which differs from said first direction (X3-X3) ; and
- wedging means (42) ensuring stressed contact along the joining strip (41) in the direction (Z3-Z3) orthogonal to the plane of the joining strip (41).

10. Aircraft, particularly a helicopter, **characterized in that** it comprises a structural assembly (1) like the one specified in any one of Claims 1 to 9.
